# EUROPÄISCHE PATENTANMELDUNG

(11) **EP 2 657 805 A1**
(43) Veröffentlichungstag der Anmeldung: **30.10.2013**
(21) Anmeldenummer: 13159867.4
(22) Anmeldetag: 19.03.2013
(51) Int. Cl.: G05G 9/047, G05G 5/05, G01B 7/30

(54) **Handsteuergeber**

(30) Priorität: 20.04.2012 DE 102012103511
(71) Anmelder: Fernsteuergeräte Kurt Oelsch GmbH, 12347 Berlin (DE)
(72) Erfinder: Neumann, Thomas, 12307 Berlin (DE); Orlowski, Josef, 12157 Berlin (DE)
(74) Vertreter: Willems, Volker

(57) **Zusammenfassung**

Die Erfindung betrifft Handsteuergeber (10) zum Steuern von Maschinen. Der Handsteuergeber (10) enthält einen Steuerhebel (22), welcher zum Steuern betätigt wird. Ferner verfügt er über wenigstens eine Steuerwelle (16, 18), welche drehbar in einer Montagevorrichtung (14) gelagert ist, und welche unmittelbar und/oder über ein Getriebe (20) mit dem Steuerhebel (22) verbunden ist. Ein Drehwinkelgeber (24, 26) erfasst den Drehwinkel, welcher mit dem Steuerhebel (22) jeweils eingestellt und an die Steuerwelle (16, 18) übertragen wird und gibt ein entsprechendes Signal aus.

## Beschreibung

### Technisches Gebiet

Die Erfindung betrifft einen Handsteuergeber zum Steuern von Maschinen, enthaltend
a) einen Steuerhebel, welcher zum Steuern betätigt wird,
b) wenigstens eine Steuerwelle,
   - welche drehbar in einer Montagevorrichtung gelagert ist, und
   - welche unmittelbar und/oder über ein Getriebe mit dem Steuerhebel verbunden ist,
c) einen Drehwinkelgeber, zum Erfassen und Ausgeben des Drehwinkels der Steuerwelle, welcher mit dem Steuerhebel jeweils eingestellt wird.

### Stand der Technik

Solche Handsteuergeber werden häufig zur Steuerung von schweren Maschinen eingesetzt. Beispielsweise werden sie zur Steuerung von Kränen, Baggern, Gabelstaplern oder als Fahrtenregler für Schienenfahrzeuge und Schiffe eingesetzt. Sie lassen sich wie ein Joystick bedienen. Grundsätzlich lassen sich viele Arten von Maschinen, die manuell bedient werden, mit einem Handsteuergeber steuern. Modulare Bauweise unterstützt die Verwendung eines Handsteuergebers in vielen Anordnungen für Maschinensteuerungen.

Die Steuerung erfolgt über die jeweilige Winkellage der Steuerwelle, die mit dem Steuerhebel verbunden ist. Es ist bekannt, die Winkellage optisch beispielsweise mittels einer kodierten Scheibe zu erfassen. Die Winkellage lässt sich aber auch elektronisch beispielsweise über ein Potentiometer ermitteln.

Es gibt eindimensionale Handsteuergeber, die nur über eine Achse betrieben werden. Aber auch zweidimensionale Handsteuergeber werden verwendet. Die zweidimensionalen Handsteuergeber verfügen dementsprechend über zwei nichtparallele Steuerwellen, die über ein geeignetes Getriebe angetrieben werden.

Die Empfindlichkeit eines Handsteuergebers lässt sich mit einem geeigneten Getriebe zwischen Steuerhebel und Steuerwelle erzielen.

Aus der DE 10 2008 022 850 A1 ist ein Handsteuergeber zum Steuern von Maschinen bekannt. Der Handsteuergeber enthält einen Steuerhebel, welcher zum Steuern betätigt wird. Ferner verfügt er über wenigstens eine Steuerwelle, welche drehbar in einer Montagevorrichtung gelagert ist, und welche unmittelbar und/oder über ein Getriebe mit dem Steuerhebel verbunden ist. Ein induktiv arbeitender Drehwinkelgeber, erfasst den Drehwinkel, welcher mit dem Steuerhebel jeweils eingestellt und an die Steuerwelle übertragen wird und gibt ein entsprechendes Signal aus.

Nachteil bei dem induktiv arbeitenden Drehwinkelgeber ist, dass nur dann ein Signal erzeugt wird, wenn der Steuerhebel bewegt wird, weil nur dann ein Strom in einem Leiter bzw. einer Leiterspule induziert wird.

### Offenbarung der Erfindung

Aufgabe der Erfindung ist es daher, die Nachteile des Standes der Technik zu vermeiden und einen robusten und wenig störanfälligen, sowie kostengünstigen Handsteuergeber zum Steuern von Maschinen zu schaffen, wobei der Drehwinkelgeber immer ein Signal für einen Drehwinkel liefert.

Erfindungsgemäß wird die Aufgabe durch einen Handsteuergeber zum Steuern von Maschinen der eingangs genannten Art gelöst, bei dem
d) der Drehwinkelgeber einen Hall-Sensor enthält, welcher von einem diametral magnetisierten Ringmagneten umgeben ist.

Der Hall-Sensor ist ein Sensor zur Erfassung von Magnetfeldern. Die Funktionsweise beruht auf dem Hall-Effekt. Prinzipiell wird beim Hall-Effekt ein stromdurchflossener Leiter bzw. Leiterschleife in ein Magnetfeld eingebracht. Dabei wird ein elektrisches Feld erzeugt. Das elektrische Feld steht senkrecht zur Stromrichtung und zum Magnetfeld. Aufgrund der Lorenzkraft wird dabei eine elektrische Spannung erzeugt. Ein Hall-Sensor liefert daher auch dann ein Signal, wenn das Magnetfeld, in dem er sich befindet, konstant ist. Dies ist ein entscheidender Vorteil gegenüber einem induktiven Sensor, der bspw. aus Magnet und Spule besteht. In dem Moment, wo nämlich der Magnet und die Spule nicht zueinander bewegt werden, ist die in der Spule induzierte Spannung null und der Magnet wird nicht erkannt. Daher liefert der Drehwinkelgeber des erfindungsgemäßen Handsteuergebers immer ein Signal, auch wenn der Steuerhebel nicht bewegt wird.

In einer vorteilhaften Ausgestaltung des erfindungsgemäßen Handsteuergebers zum Steuern von Maschinen ist der Hall-Sensor räumlich in der Montagevorrichtung räumlich fixiert. Dabei ist der diametral magnetisierte Ringmagnet zusammen mit der Steuerwelle drehbar vorgesehen. Das Magnetfeld bewegt sich letztendlich mit der Drehung der Steuerwelle über den diametral ausgerichteten Ringmagneten. Für die Auswertung einer Auslenkung des Steuerhebels werden dann der drehbare und diametral ausgerichtete Ringmagnet und der Hall-Sensor verwendet. Der Hall-Sensor ist hierfür vorzugsweise mittig in dem Loch des Ringmagneten und in Nullstellung so angeordnet, dass dieser in der Mitte das Feld als Null erkennt bzw. wie parallel das Feld ist. Bei einer Auslenkung des Steuerhebels steigt die Hall-Spannung für eine Auswertung an.

Eine bevorzugte Ausbildung des erfindungsgemäßen Handsteuergeber besteht darin, dass ein federbelasteter Rückstellmechanismus vorgesehen ist, mit welchem der Steuerhebel aus einer ausgelenkten Stellung in eine Ausgangsstellung zurückgestellt wird. Diese Maßnahme wird dadurch erreicht, dass der Steuerhebel nach einer Auslenkung automatisch in seine Ausgangsstellung zurückgeführt wird.

Vorzugsweise weist der federbelastete Rückstellmechanismus für den Steuerhebel eine Druck- und eine Zugfeder auf, welche den Steuerhebel in ihre Ausgangsstellung zurückbringt. Durch die Druck- und eine Zugfeder sind die Rückstellkräfte doppelt ausgelegt. Bei gleichen Federn sind die Auslenkkräfte des Steuerhebels in alle Richtungen in etwa gleich. Damit erhält der Rückstellmechanismus ferner eine Redundanz. Bricht beim Auslenken des Steuerhebels nämlich eine Feder, so wird der Steuerhebel trotzdem in seine Ausgangsposition bzw. eine Nullstellung zurückgeführt. Der Rückstellmechanismus sorgt zudem für eine gute und gleichmäßige Haptik beim Betätigen des Handsteuergeräts.

In einer weiteren Ausgestaltung des erfindungsgemäßen Handsteuergebers sind die Druck- und die Zugfeder mit einem Rückstellhebel jeweils gegenüberliegend an der Steuerwelle vorgesehen. Diese Anordnung lässt sich relativ kompakt realisieren. Die Druck- und die Zugfeder stören sich nicht bei ihrer Betätigung. Die Rückstellhebel sind jeweils mit der Steuerwelle gekoppelt. Dabei zieht immer eine Feder, die Zugfeder und eine Feder wird gestaucht, die Druckfeder. Vorzugsweise handelt es sich hierbei um Spiralfedern. Die Rückstellhebel übertragen bei einer Auslenkung des Steuerhebels die Federkräfte der Druck- und der Zugfeder auf die Steuerwelle. Der Steuerhebel lässt sich somit nur gegen die Federkräfte auslenken.

In einem bevorzugten Aspekt sind wenigstens zwei zueinander senkrecht angeordnete Steuerwellen für den Steuerhebel bei dem erfindungsgemäßen Handsteuergeber vorgesehen. Damit lassen sich verschiedenste Arten von Einstellmöglichkeiten des Steuerhebels in einer zweidimensionalen Ebene realisieren. Jede Steuerwelle ist dabei jeweils mit einem der Drehwinkelgeber gekoppelt um den Drehwinkel jeder Steuerwelle und damit die jeweilige Auslenkung des Steuerhebels zu erfassen. Vorzugsweise sind die Drehwinkelgeber redundant an jeder Steuerwelle vorgesehen, um auch bei einem Ausfall eines Drehwinkelgebers trotzdem ein auswertbares Signal für einen Drehwinkel zu liefern.

In einer vorteilhaften Variante weist der Rückstellmechanismus eine Druck- und eine Zugfeder auf, welche den Steuerhebel in seine Ausgangsstellung zurückbringt. Durch die Druck- und eine Zugfeder sind die Rückstellkräfte doppelt ausgelegt. Bei gleichen Federn sind dann die Auslenkkräfte des Steuerhebels in alle Richtungen in etwa gleich. Damit wird der Steuerhebel des Handsteuergebers redundant in seine Ausgangsstellung zurückgestellt. Bricht beim axialen Bewegen des Steuerhebels nämlich eine Feder, so wird der Steuerhebel trotzdem in seine Ausgangsposition bzw. eine Nullstellung zurückgeführt.

Eine weitere vorteilhafte Ausgestaltung des Handsteuergebers besteht darin, dass eine Steuerelektronik mit einem Mikroprozessor vorgesehen ist, welche den erfassten Drehwinkel des Drehwinkelgebers digital verarbeitet. Die Steuerelektronik verarbeitet die Spannungssignale, die von den Drehwinkelgebern erzeugt werden. Üblicherweise wandelt ein Analog-Digital-Wandler die analogen Spannungssignale in digitale Werte um. Diese können dann von dem Mikroprozessor verarbeitet und zur Steuerung ausgegeben werden.

Eine bevorzugte Ausgestaltung des erfindungsgemäßen Handsteuergebers zum Steuern von Maschinen besteht ferner darin, dass der Steuerhebel bzw. ein Segment des Steuerhebels um seine Längsachse drehbar ausgebildet ist und ein Drehwinkelgeber den Drehwinkel erfasst und signalisiert. Mit dieser Maßnahme wird erreicht, dass hier ein weiteres Steuerelement an dem Steuerhebel zum Steuern einer Maschine vorgesehen ist. Dadurch erhält man einen extrem kompakten und einfach zu bedienenden Handsteuergeber mit vielen Steuerelementen.

Vorzugsweise weist der Handsteuergeber dann einen Rückstellmechanismus zur Rückführung des Steuerhebels bzw. eines Segments des Steuerhebels in eine Ausgangslage auf. Dabei kann es sich um eine Schneckenfeder handeln, die einen um seine Achse gedrehten Steuerhebel wieder in seine Ausgangslage zurückführt.

Weitere Vorteile und Ausgestaltungen der Erfindung sind Gegenstand der Unteransprüche. Ein Ausführungsbeispiel ist nachstehend unter Bezugnahme auf die beigefügten Zeichnungen näher erläutert. Die Erfindung soll sich dabei nicht nur auf das nachfolgend dargestellte Ausführungsbeispiel beschränken, sondern auch auf solche Ausführungen, Anwendungen und Gegenstände erstrecken, die sich dem Fachmann aus dem Gesamtzusammenhang erschließen.

### Kurze Beschreibung der Zeichnung

- Fig. 1: zeigt in einer schematischen Prinzipskizze eine erste Seitenansicht des erfindungsgemäßen Handsteuergebers.
- Fig. 2: zeigt in einer schematischen Prinzipskizze eine zweite Seitenansicht des erfindungsgemäßen Handsteuergebers.
- Fig. 3: zeigt eine Draufsicht des erfindungsgemäßen Handsteuergebers gemäß Figur 1 bzw. Figur 2.
- Fig. 4: zeigt in einer Explosionszeichnung den inneren Teil des erfindungsgemäßen Handsteuergebers.
- Fig. 5: zeigt in einer dreidimensionalen Prinzipskizze den erfindungsgemäßen Handsteuergeber.
- Fig. 6: zeigt in einer schematischen Prinzipskizze einen Hall-Sensor in einem diametral ausgerichteten Ringmagneten des erfindungsgemäßen Handsteuergebers.
- Fig. 7: zeigt in einer schematischen und dreidimensionalen Prinzipskizze einen erfindungsgemäßen Handsteuergeber gemäß den vorherigen Figuren, bei dem ein Teil längs herausgeschnitten ist.

### Bevorzugtes Ausführungsbeispiel

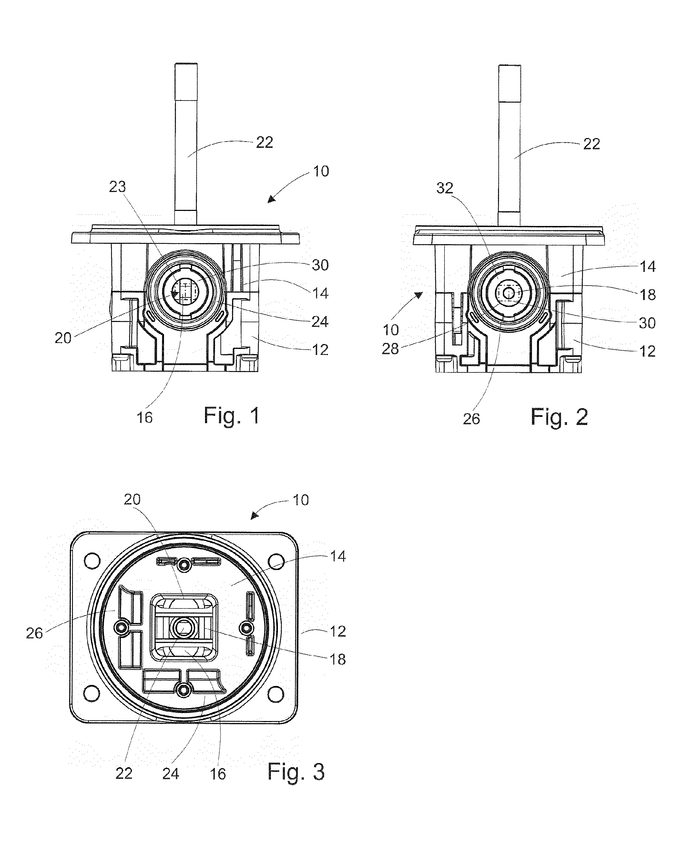

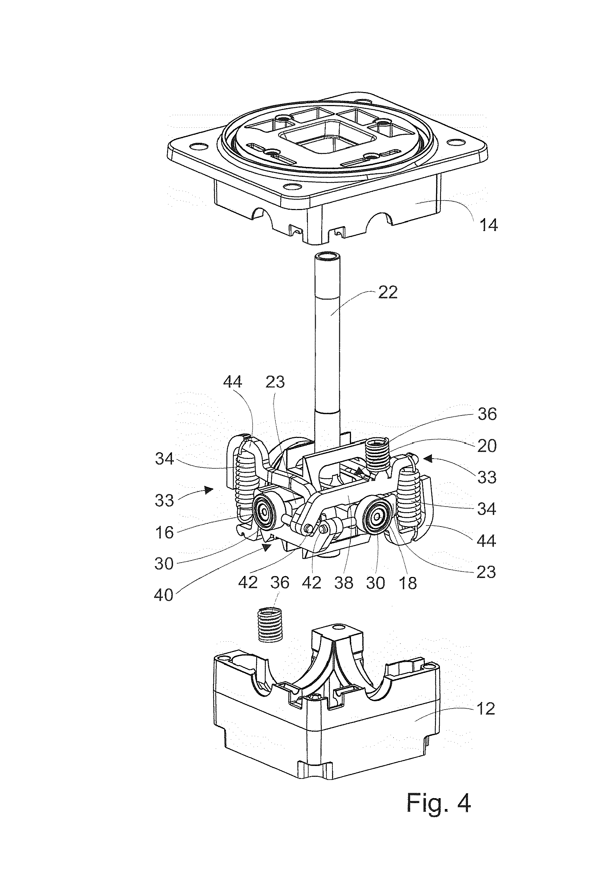

In Fig. 1 wird in einer schematischen Prinzipskizze eine erste Seitenansicht des erfindungsgemäßen Handsteuergebers 10 gezeigt. Der Handsteuergeber 10 verfügt über ein Gehäuse 12, in dem eine Montagevorrichtung 14 vorgesehen ist. Mit 16 wird eine erste Steuerwelle bezeichnet. Die Steuerwelle 16 ist senkrecht zu einer zweiten Steuerwelle 18 angeordnet (siehe Fig. 2). Die Steuerwellen 16, 18 sind in der Montagevorrichtung 14 drehbar gelagert vorgesehen. Die Steuerwellen 16, 18 sind dabei über ein Getriebe 20 (siehe Fig. 4) mit einem Steuerhebel 22 verbunden. Der Steuerhebel 22 kann sowohl um die erste Steuerwelle 16, als auch um die zweite Steuerwelle 18 ausgelenkt werden. Die Steuerwellen weisen exzentrische Druckstücke 23 auf, um den Steuerhebel 22 leichter auf eine Null- bzw. Ausgangsstellung zu setzen.

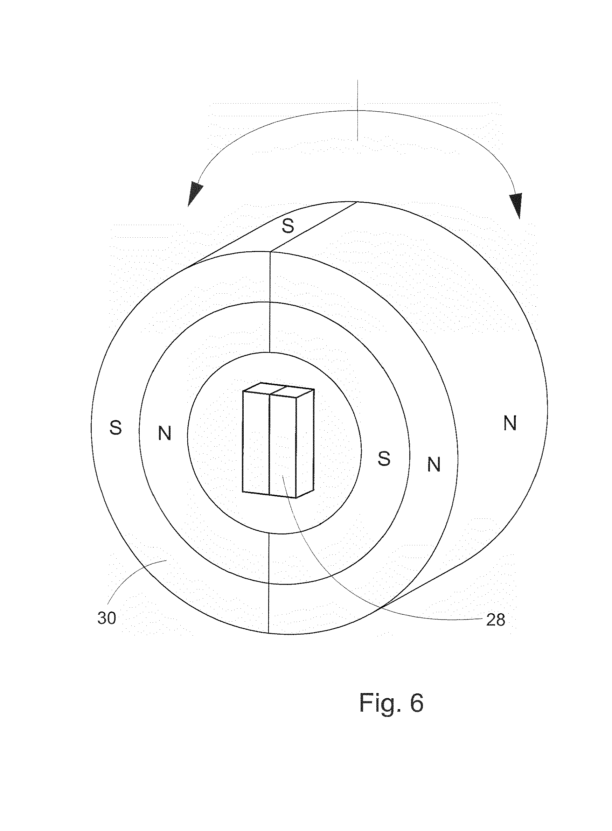

Zur Erfassung der jeweiligen Auslenkung um die Steuerwellen 16, 18 sind an jeder Steuerwelle 16, 18 jeweils zwei Drehwinkelgeber 24, 26 vorgesehen. Die Drehwinkelgeber 24, 26 enthalten jeweils einen Hall-Sensor 28 (siehe Fig. 2). Der Hall-Sensor 28 ist gegenüber der Montagevorrichtung 14 ortsfest vorgesehen. Der Hall-Sensor 28 wird jeweils von einem Ringmagneten 30 umgeben. Der Ringmagnet 30 ist diametral ausgerichtet magnetisiert (siehe Fig. 6). Der Ringmagnet 30 ist jeweils mit der drehbar gelagerten Steuerwelle 16, 18 verbunden, so dass sich dieser entsprechend dreht.

Fig. 2 zeigt den Handsteuergeber 10 in einer gegenüber Fig. 1 um 90° gedrehten Seitenansicht. Gleiche Bestandteile verfügen daher auch über identische Bezugszeichen. Eine Kappe 32 mit dem Hall-Sensor 28 ist dabei ortsfest gegenüber der Montagevorrichtung 14, über das Ende der Steuerwelle 18 gestülpt. Der Hall-Sensor 28 ragt nach innen in den Ringmagneten 30 hinein.

Fig. 3 zeigt in einer eine Draufsicht des erfindungsgemäßen Handsteuergebers 10 gemäß Figur 1 bzw. Figur 2. Gleiche Bestandteile verfügen daher auch hier über identische Bezugszeichen.

Fig. 4 zeigt in einer Explosionszeichnung den inneren Teil des erfindungsgemäßen Handsteuergebers 10. Der Steuerhebel 22 ist über das Getriebe 20 mit den Steuerwellen 16, 18 gekoppelt. Der Steuerhebel 22 wird mit einem federbelasteten Rückstellmechanismus 33 nach einer Auslenkung immer in eine Ausgansstellung zurückgestellt. Der Rückstellmechanismus 33 enthält dazu Zugfedern 34 und Druckfedern 36. Die Zugfedern 34 und Druckfedern 36 betätigen jeweils einen Rückstellhebel 38, 40 des Rückstellmechanismus 33. Die Rückstellhebel 38, 40 sind über Drehachsen 42 an der Montagevorrichtung 14 schwenkbar gelagert. Die Rückstellhebel 38, 40 werden durch die Zugfedern 34 und Druckfedern 36 federbelastet. Dazu werden sie jeweils mit Federhebeln 44 des Rückstellmechanismus 33, welche an der Montagevorrichtung 14 vorgesehen sind und den Rückstellhebeln 38, 40 verbunden. Die Rückstellhebel 38, 40 sind derart über die exzentrischen Druckstücke 23 mit den Steuerwellen 16, 18 gekoppelt, dass sie die Steuerwellen 16, 18 in eine Ausgangsposition zurückstellen.

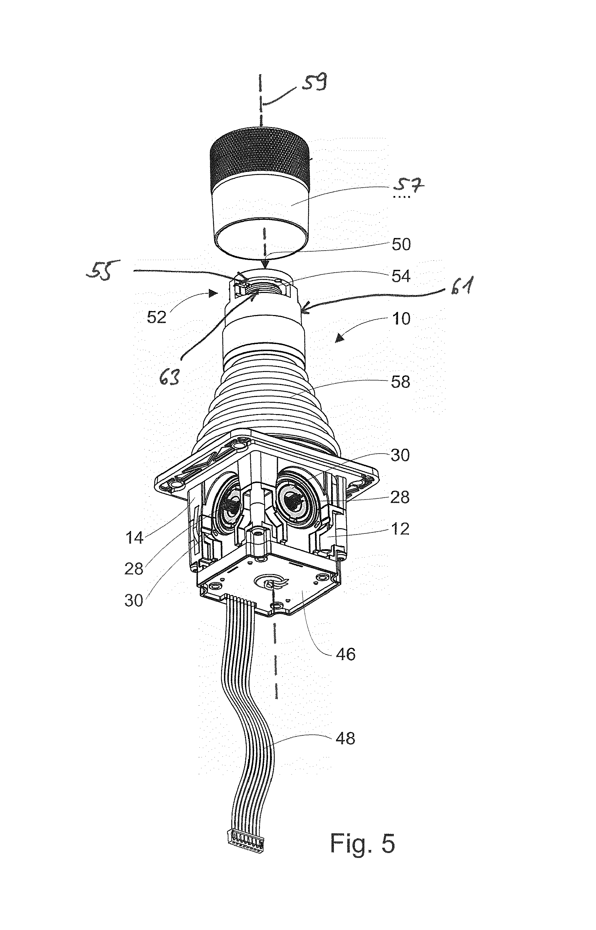

Fig. 5 zeigt in einer dreidimensionalen Prinzipskizze den erfindungsgemäßen Handsteuergeber 10. Der Handsteuergeber 10 weist eine Steuerelektronik 46 im vorliegenden Ausführungsbeispiel mit einem Mikroprozessor auf. Eine solche Steuerelektronik 46 ließe sich natürlich auch analog, d.h. ohne Mikroprozessor, verwenden. Mit dem Mikroprozessor werden die erfassten Drehwinkel der Drehwinkelgeber 24, 26 digital verarbeitet. Die Steuerelektronik 46 verarbeitet dabei die Spannungssignale, die von den Drehwinkelgebern 24, 26 erzeugt werden. Dazu wandelt ein Analog-Digital-Wandler die analogen Spannungssignale in digitale Werte um. Diese können dann von dem Mikroprozessor verarbeitet und zur Steuerung der Maschine über einen Ausgang 48, welches vorzugsweise durch ein Datenkabel gebildet wird, ausgegeben werden. Der Steuerhebel 22 verfügt ferner über ein Winkelsegment 55, welches mit einer Griffkappe 57 abgedeckt ist. Das Winkelsegment 55 des Steuerhebels 22 ist drehbar um seine Längsachse 59 ausgebildet. Dabei erfasst ein Drehwinkelgeber 61 den Drehwinkel. Der erfasste Drehwinkel wird von dem Drehwinkelgeber 61 zur Weiterverarbeitung signalisiert. Der Drehwinkelgeber ein 61 ist ebenso als Hall-Sensor 28 mit einem Ringmagneten 30 ausgebildet. Das Winkelsegment 55 wird mit einem Rückstellmechanismus 63 in eine Ausgangslage zurückgeführt. Der Rückstellmechanismus 63 für das Winkelsegment 55 des Steuerhebels 22 besteht beispielsweise aus zwei Schenkelfedern. Durch die Schenkelfedern sind die Rückstellkräfte doppelt ausgelegt. Bei gleichen Schenkelfedern sind die Auslenkkräfte des Rückstellmechanismus 63 in etwa gleich. Der Rückstellmechanismus 63 erhält eine Redundanz. Bricht eine Schenkelfeder beim Auslenken, so wird der Steuerhebel 22 trotzdem in seine Ausgangsposition zurückgeführt. Der Steuerhebel 22 ist mit einer elastischen Schutzhülle 58 abgedeckt und schützt vor Umwelteinflüssen, wie Verschmutzungen.

Fig. 6 zeigt in einer schematischen Prinzipskizze einen Hall-Sensor 28 in einem diametral ausgerichteten Ringmagneten 30 des erfindungsgemäßen Handsteuergebers 10. Der Ringmagnet 30 dreht sich bei Auslenkung des Steuerhebels 22 wahlweise in die eine oder in die andere Richtung. Dabei fährt die Hall-Spannung eine Sinuskurve ab, welche in der Ausgansstellung ihren Nullpunkt hat. Durch die Vorzeichen der Hall-Spannung lässt sich daher auch die Richtung des Drehwinkels ermitteln.

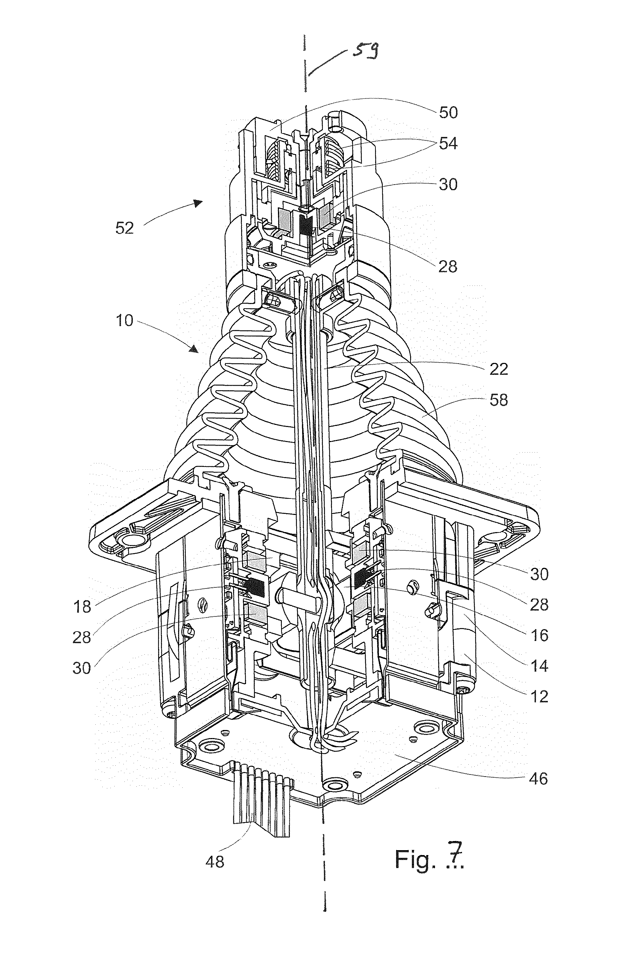

In Figur 7 wird der erfindungsgemäße Handsteuergeber 10 nochmals schematisch und dreidimensional dargestellt. Bei dem Handsteuergeber 10 wurde längs, in etwa ein Viertel herausgeschnitten, so dass durch das Gehäuse 12 in das Innere des Handsteuergebers 10 geschaut werden kann. Im unteren Teil ist die Montagevorrichtung 14 angeordnet, in der die Steuerwellen 16, 18 drehbar vorgesehen sind. Der aus dem unteren Teil des Gehäuses 12 ragende Steuerhebel 22 kann über Steuerwellen 16, 18 ausgelenkt werden. In dieser Abbildung ist der Hall-Sensor 28 mit dem Ringssensor 30 für jede Steuerwellen 16, 18 ebenfalls im Schnitt zu sehen. Wie aus dieser Figur hervorgeht, ist der Steuerhebel 22 hohl ausgebildet und in der Lage, Kabel aufzunehmen. Die Schutzhülle 58 schützt den Steuerhebel 22 und dessen Eingangsöffnung in das Gehäuse 12 vor Verschmutzungen. Im oberen Bereich des Steuerhebels 22 ist das Winkelsegment 55 angeordnet. Dabei lässt sich das Winkelsegment 55 des Steuerhebels 22 um die Längsachse 59 drehen. Der ermittelte Drehwinkel wird von dem Drehwinkelgeber 61 weiterverarbeitet und beispielsweise zur Steuerung signalisiert. Der Drehwinkelgeber ein 61 ist als Hall-Sensor 28 mit dem Ringmagneten 30 ausgebildet. Das Winkelsegment 55 wird nach einer Auslenkung um einen Drehwinkel mit einem Rückstellmechanismus 63 in eine Ausgangslage zurückgeführt. Ein Kabelband dient als Ausgang 48 für die Mess- und Steuerdaten.

## Patentansprüche

1. Handsteuergeber (10) zum Steuern von Maschinen, enthaltend
a) einen Steuerhebel (22), welcher zum Steuern betätigt wird,
b) wenigstens eine Steuerwelle (16, 18),
- welche drehbar in einer Montagevorrichtung (14) gelagert ist, und
- welche unmittelbar und/oder über ein Getriebe (20) mit dem Steuerhebel (22) verbunden ist,
c) einen Drehwinkelgeber (24 26), zum Erfassen und Ausgeben des Drehwinkels der Steuerwelle, welcher mit dem Steuerhebel jeweils eingestellt wird,
**dadurch gekennzeichnet, dass**
d) der Drehwinkelgeber (24, 26) einen Hall-Sensor (28) enthält, welcher von einem diametral magnetisierten Ringmagneten (30) umgeben ist.

2. Handsteuergeber (10) zum Steuern von Maschinen nach Anspruch 1, **dadurch gekennzeichnet, dass** der Hall-Sensor (28) räumlich in der Montagevorrichtung (14) fixiert und der diametral magnetisierte Ringmagnet (30) mit der Steuerwelle (16, 18) drehbar vorgesehen ist.

3. Handsteuergeber (10) zum Steuern von Maschinen nach einem der Ansprüche 1 oder 2, **dadurch gekennzeichnet, dass** ein federbelasteter Rückstellmechanismus (33) vorgesehen ist, mit welchem der Steuerhebel (22) aus einer ausgelenkten Stellung in eine Ausgangsstellung zurückgestellt wird.

4. Handsteuergeber (10) zum Steuern von Maschinen nach Anspruch 3, **dadurch gekennzeichnet, dass** der federbelastete Rückstellmechanismus (33) für den Steuerhebel (22) eine Druck- (36) und eine Zugfeder (34) aufweist, welche den Steuerhebel (22) in seine Ausgangsstellung zurückbringt.

5. Handsteuergeber (10) zum Steuern von Maschinen nach einem der Ansprüche 1 bis 4, **dadurch gekennzeichnet, dass** die Druck- (36) und die Zugfeder (34) mit einem Rückstellhebel (38, 40) jeweils gegenüberliegend an der Steuerwelle (16, 18) vorgesehen sind.

6. Handsteuergeber (10) zum Steuern von Maschinen nach einem der Ansprüche 1 bis 5, **dadurch gekennzeichnet, dass** wenigstens zwei zueinander senkrecht angeordnete Steuerwellen (16, 18) für den Steuerhebel (22) vorgesehen sind.

7. Handsteuergeber (10) zum Steuern von Maschinen nach einem der Ansprüche 1 bis 6, **dadurch gekennzeichnet, dass** der Steuerhebel (22) bzw. ein Teil des Steuerhebels (22) auf seiner Achse beweglich ausgebildet ist.

8. Handsteuergeber (10) zum Steuern von Maschinen nach einem der Ansprüche 1 bis 7, **gekennzeichnet durch** eine Steuerelektronik (46) mit einem Mikroprozessor, welche den erfassten Drehwinkel des Drehwinkelgebers (24, 26) digital verarbeitet.

9. Handsteuergeber (10) zum Steuern von Maschinen nach einem der Ansprüche 1 bis 8, **dadurch gekennzeichnet, dass** der Steuerhebel (22) bzw. ein Segment des Steuerhebels (22) um seine Längsachse drehbar ausgebildet ist und ein Drehwinkelgeber den Drehwinkel erfasst und signalisiert.

10. Handsteuergeber (10) zum Steuern von Maschinen nach Anspruche 9, **gekennzeichnet durch** einen Rückstellmechanismus zur Rückführung des Steuerhebels (22) bzw. eines Segments des Steuerhebels (22) in eine Ausgangslage.
